# NEW EUROPEAN PATENT SPECIFICATION

(11) **EP 0 558 019 B2**
(45) Date of publication and mention of the opposition decision: **14.12.2005**
(45) Mention of the grant of the patent: 27.12.1996
(21) Application number: 93103027.4
(22) Date of filing: 26.02.1993
(51) Int. Cl.: B01D 53/14

(54) **Method for removing carbon dioxide from combustion exhaust gas**
Verfahren zur Entfernung von Kohlendioxid aus Verbrennungsabgasen
Méthode d'élimination de l'anhydride carbonique de gaz d'échappement de combustion

(30) Priority: 27.02.1992 JP 4080792; 16.09.1992 JP 24639592; 27.02.1992 JP 4080892; 16.06.1992 JP 24639692
(43) Date of publication of application: 01.09.1993
(73) Proprietor: THE KANSAI ELECTRIC POWER CO., INC., Osaka-shi, Osaka 530 (JP); MITSUBISHI JUKOGYO KABUSHIKI KAISHA, Tokyo (JP)
(72) Inventor: Yoshida, Kunihiko, c/o The Kansai El. Power Co.Inc, Osaka-shi, Osaka (JP); Mimura, Tomio, c/o The Kansai El. Power Co.Inc, Osaka-shi, Osaka (JP); Shimojo, Shigeru, c/o The Kansai El. Power Co. Inc, Osaka-shi, Osaka (JP); Karasaki, Mutsunori, c/o Mitsubishi Jukogyo K.K., Tokyo (JP); Iijima, Masaki, c/o Mitsubishi Jukogyo K.K., Tokyo (JP); Seto, Touru, c/o Mitsubishi Jukogyo K.K., Hiroshima-shi, Hiroshima-ken (JP); Mitsuoka, Shigeaki, c/o Mitsubishi Jukogyo K.K., Hiroshima-shi, Hiroshima-ken (JP)
(74) Representative: Luderschmidt, Schüler & Partner GbR

(56) References cited:
- WO-A-89/11327
- FR-A- 2 332 049
- GB-A- 1 593 420
- US-A- 18 958
- US-A- 3 856 921
- US-A- 4 100 257
- US-A- 4 101 633
- US-A- 4 112 052
- US-A- 4 217 236
- US-A- 4 217 238
- US-A- 4 240 922
- US-A- 4 240 923
- US-A- 4 405 581

## Description

### FIELD OF THE INVENTION AND RELATED ART STATEMENT

The present invention relates to a method for removing CO₂ (carbon dioxide) from a combustion exhaust gas. More specifically, it relates to a method for removing CO₂ from a combustion exhaust gas under atmospheric pressure by the use of a specific mixed aqueous solution containing an amine.

In recent years, a greenhouse effect by CO₂ is indicated as one cause of the warming phenomenon of the earth, and its prompt resolution is globally required in order to protect earth circumstances. The generation sources of CO₂ extend in active fields of all humans in which fossil fuels are burned, and there is a tendency that the discharge regulation of CO₂ will be further tightened in the future. Thus, for power generation facilities such as thermoelectric power plants in which a large amount of the fossil fuel is used, there are energetically researched a method for removing and recovering CO₂ from a combustion exhaust gas by bringing the combustion exhaust gas coming from a boiler into contact with an aqueous alkanolamine solution or the like, and a method for storing the recovered CO₂ without discharging it into the atmosphere.

Examples of the alkanolamine include monoethanolamine, diethanolamine, triethanolamine, dimethyldiethanolamine, diisopropanolamine and diglycalamine, and in general, monoethanolamine (abbreviated to "MEA") is preferably used.

However, even if the above-mentioned aqueous alkanolamine solution typified by MEA is used as an absorbing solution for absorbing/removing CO₂ from a combustion exhaust gas, the effect of the alkanolamine is not always satisfactory in view of an amount of absorbed CO₂ per predetermined amount of the aqueous alkanolamine solution having a predetermined concentration, an amount of absorbed CO₂ per unit amine mole of the aqueous alkanolamine solution having a predetermined concentration, an absorption rate of CO₂ at a predetermined concentration, heat energy required to recover the aqueous alkanolamine solution after the absorption, and the like.

In the meantime, for the separation of an acidic gas from various mixed gases by the use of an amine compound, many techniques are known.

JP-A-78100180 discloses a method for removing an acidic gas which comprises bringing a usually gaseous mixture into contact with an amine-solvent liquid absorbent comprising
(1) an amine mixture comprising at least 50 mole% of a steric hindrance amine constituting a part of a ring and having at least one secondary amino group bonded to either of a secondary carbon atom or a tertiary carbon atom or a primary amino group bonded to the tertiary carbon atom, and at least about 10 mole% of the tertiary amino-alcohol, and
(2) a solvent for the above-mentioned amine mixture which functions as a physical absorbent for the acidic gas.
Usable examples of the steric hindrance amine include 2-piperidine ethanol[2-(2-hydroxyethyl)-piperidine] and 3-amino-3-methyl-1-butanol, and a usable example of the tertiary amino-alcohol is 3-dimethylamino-1-propanol. Furthermore, an example of the solvent is a sulfoxide compound which may contain water in an amount of 25% by weight or less, and an example of a gas to be treated is "a usually gaseous mixture containing carbon dioxide and hydrogen sulfide at high concentrations, for example, 35% of CO₂ and 10-12% of H₂S⁻ on page 1, left upper column of the same gazette. In the undermentioned examples, CO₂ itself is used.

JP-A-8671819, there is described a composition for the scraping of an acidic gas which contains a non-aqueous solvent such as a steric hindrance amine or sulfolane. As an example of the primary monoamino alcohol of the steric hindrance, 2-amino-2-methyl-1-propanol (abbreviated to AMP) is exemplified and used. In examples, CO₂ and nitrogen as well as CO₂ and helium are used. Furthermore, as absorbents, an aqueous solution of an amine and potassium carbonate, and the like are used. The use of water is also referred to. In addition, this gazette describes the advantage of the steric hindrance amine in the absorption of CO₂ by reaction formulae.

In Chemical Engineering Science, Vol. 41, No. 4, pp. 997-1,003, there is disclosed a carbon dioxide gas absorption behavior of an aqueous AMP solution which is a hindered amine. As gases to be absorbed, CO₂ and a mixture of CO₂ and nitrogen at atmospheric pressure are used.

Chemical Engineering Science, Vol. 41, No. 4, pp. 405-408 has reported absorption rates of an aqueous solution of a hindered amine such as AMP and an aqueous solution of a straight-chain amine such as MEA to CO₂ and H₂S in the vicinity of ordinary temperature. According to this report, a large difference is not present between both the aqueous solutions, in the case that the partial pressure of CO₂ is 1 atm and the concentrations of the aqueous solutions are from 0.1-0.3 mole. However, it is apparent that when the concentrations of the aqueous solutions are 0.1 mole and the partial pressure of CO₂ is decreased to 1, 0.5 and 0.05 atm, the absorption rate of AMP deteriorates more largely than that of MEA at 0.05 atm.

U.S. Patent No. 3,622,267 discloses a technique in which an aqueous mixture containing methyldiethanolamine and monoethylmonoethanolamine is used to purify a high-partial pressure CO₂ contained in a synthetic gas such as a partially oxidized gas of a crude oil or the like, for example, a synthetic gas containing 30% of CO₂ at 40 atm.

DE-A-1,542,415 discloses a technique in which a monoalkylalkanolamine or the like is added to a physical or chemical absorbent in order to improve the absorption rate of CO₂, H₂S and COS. Similarly, German Laid-open Patent No. 1,904,428 discloses a technique in which monomethylethanolamine is added for the purpose of improving the absorption rate of methyldiethanolamine.

U.S. Patent No. 4,336,233 discloses a technique in which, for the purification of a natural gas, a synthetic gas or a gasified coal gas, a 0.81-1.3 mole/liter aqueous piperazine solution is used as a wash liquid, or piperazine is used in the state of an aqueous solution together with a solvent such as methyldiethanolamine, triethanolamine, diethanolamine or monomethylethanolamine as a wash liquid.

Similarly, JP-A-7763171 discloses a CO₂ absorbent obtained by adding piperazine or a piperazine derivative such as hydroxyethylpiperazine as an accelerator to a tertiary alkanolamine, a monoalkylalkanolamine or the like.

US-A-4,217,236 contemplates a process for removing carbon dioxide containing gases from a normally gaseous mixture wherein the process comprises contacting the mixture with an aqueous amine solution, wherein the amine consists of at least 50 mol % of a sterically hindered amino alcohol and at least about 10 mol % of a tertiary amino alcohol, wherein said sterically hindered amino alcohol contains at least one secondary amino group which is part of a ring and is attached to either a secondary or tertiary carbon atom or a primary amino group attached to a tertiary carbon atom. It is disclosed by US-A-4,217,236 that the coaction of the sterically hindered amino alcohol and the tertiary amino alcohol provide an increase in the amount of carbon dioxide containing acidic gases absorbed compared to the use of the sterically hindered amines alone and lowers the heat of reaction.

FR-A-2,332,049 teaches to essentially use piperazine-containing solvents for separating CO₂, H₂S and COS from a gas containing such components. According to FR-A-2,332,049 piperazine is successfully combined with amino alcohols like secondary or tertiary alkylaminoalcohols, e.g. their monoalkyl- or dialkyl-derivatives.

### OBJECT AND SUMMARY OF THE INVENTION

As described above, a method for efficiently removing CO₂ from a combustion exhaust gas has been heretofore desired. In particular, in the case that the combustion exhaust gas is treated with an aqueous solution containing a CO₂ absorbent at a certain concentration, it is an urgent serious problem to select an absorbent which is capable of absorbing a large amount of CO₂ per unit mole of the absorbent and absorbing a large amount of CO₂ per unit volume of the aqueous solution and which has a high absorption rate. Furthermore, another requirement of the absorbent is to permit the separation of CO₂ and the recovery of the absorbing solution with a small amount of heat energy, after the absorption of CO₂. Above all, it is desired to improve the absorption rate of the absorbent having a large CO₂ absorption power but a low absorption rate.

In view of the above-mentioned problems, the present inventors have intensively investigated an absorbent for use in the removal of CO₂ from a combustion exhaust gas. As a result, they have found that the employment of a specific hindered amine solution is particularly effective, and thus the present invention has now been completed.

That is, the present invention is directed to a method for removing carbon dioxide from a combustion exhaust gas according to claim 1.

In the present invention, the above-mentioned hindered amine is particularly preferably 2-amino-2-methyl-1-propanol.

Every hindered amine which can be used in the present invention has an alcoholic hydroxyl group in its molecule. It is preferred that one alcoholic hydroxyl group is present in the hindered amine molecule. Furthermore, the molecular weight of the hindered amine is preferably 150 or less from the viewpoint of CO₂ absorption power per unit amount of the solution at a predetermined concentration.

One of the hindered amines which can be used in the present invention is (A) a compound having an alcoholic hydroxyl group and a primary amino group, said primary amino group being bonded to a tertiary carbon atom having two unsubstituted alkyl groups. In this (A), the unsubstituted alkyl groups may be mutually identical or different, and examples of the unsubstituted alkyl groups include a methyl group, an ethyl group and a propyl group, but both of the unsubstituted alkyl groups are preferably the methyl groups. Typical examples of this (A) include 2-amino-2-methyl-1-propanol, 3-amino-3-methyl-2-pentanol, 2,3-dimethyl-3-amino-1-butanol, 2-amino-2-ethyl-1-butanol, 2-amino-2-methyl-3-pentanol, 2-amino-2-methyl-1-butanol, 3-amino-3-methyl-1-butanol, 3-amino-3-methyl-2-butanol, 2-amino-2,3-dimethyl-3-butanol, 2-amino-2,3-dimethyl-butanol and 2-amino-2-methyl-1-pentanol, and above all, 2-amino-2-melhyl-1-propanol (AMP) is preferable.

Still another amine of the hindered amines which can be used in the present invention is (D) a 2-substituted piperidine having a hydroxyl group-substituted alkyl group at the 2-position. Typical examples of the 2-substituted piperidine include 2-(hydroxymethyl)-piperidine, 2-(2-hydroxyethyl)-piperidine and 2-(1-hydoxymethyl)-piperidine, and above all, 2-(2-hydroxyethyl)piperidine (hereinafter abbreviated to "HEP") is preferable.

In view of the above-mentioned problems, the present inventors have intensively investigated an absorbent for use in the removal of CO₂ from the combustion exhaust gas, and as a result, they have found that the utilization of a mixture obtained by mixing a specific amine compounds (X) with a relatively small amount of a specific amine compound (Y) is particularly effective to improve the absorption rate of the specific amine compound (X). In consequence, the present invention has now been achieved.

That is, the present invention is directed to a method for removing carbon dioxide from a combustion exhaust gas which comprises the step of bringing the combustion exhaust gas under atmospheric pressure into contact with a mixed aqueous solution of 100 parts by weight of an amine compound (X) selected from the group consisting of (A) a compound having one alcoholic hydroxyl group and a primary amino group in its molecule, said primary amino group being bonded to a tertiary carbon atom having two unsubstituted alkyl groups; and 1-25 parts by weight of an amine compound (Y) selected from the group consisting of (D) piperazine, (E) piperidine, (F) morpholine, (G) glycine, (D) as mentioned above, and (B) a compounds having one alcoholic hydroxyl group and a secondary amino group in its molecule, said secondary amino group having an unsubstituted alkyl group of 3 or less carbon atoms and an N atom bonded to a group having a chain of 2 or more carbon atoms inclusive of a bonded carbon atom.

As a particularly preferable embodiment of the present invention, there can be recited a method for removing CO₂ from a combustion exhaust gas which comprises the step of bringing the combustion exhaust gas under atmospheric pressure into contact with a mixed aqueous solution of 100 parts by weight of 2-amino-2-methyl-1propanol, as the above-mentioned amine compound (X); and 1-25 parts by weight of an amine compound, as the above-mentioned amine compounds, selected from the group consisting of piperazine, piperidine, morpholine, glycine, 2-methylaminoethanol, 2-piperidineethanol and 2-ethylaminoethanol.

The combinatian of the specific amine compounds (X) and (Y) which can be used in the present invention are as described above. However, one amine compound (X) may be combined with one amine compound (Y), or alternatively, one of either group of the amine compounds (X) and (Y) may be combined with two or more of the other group.

One of the amine compounds which can be used in the present invention is (A) a compound having one alcoholic hydroxyl group and a primary amino group in its molecule, said primary amino group being bonded to a tertiary carbon atom having two unsubstituted alkyl groups, In this (A), the unsubstituted alkyl groups may be mutually identical or different, and their examples include a methyl group, an ethyl group and a propyl group Preferably, both of the unsubstituted alkyl groups are the methyl groups. Typical examples of this (A) indude 2-amino-2-methyl-1-propanol, 3-amino-3-methyl-2-pentanol, 2,3-dimethyl-3-amino-1-butanol, 2-amino-2-ethyl-1-butanol, 2-amino-2-methyl-3-pentanol, 2-amino-2-methyl-1butanol, 3-amino-3-methyl-1-butanol, 3-amino-3-methyl-2-butanol, 2-amino-2,3-dimethyl-3-butanol, 2-amino-2,3-dimethyl-1-butanol and 2-amino-2-methyl-1-pentanol. Above all, 2-amino-2-methyl-1-propanol (AMP) is preferable.

Still another compound of the amine compounds which can be used in the present invention is (B) a compound having one alcoholic hydroxyl group and a secondary amino group in its molecule, the secondary amino group having an unsubstituted alkyl group of 3 or less carbon atoms and an N atom bonded to a group having a chain of 2 or more carbon atoms indusive of a bonded carbon atom. In this (B), an example of the chain of 2 or more carbon atoms inclusive of the bonded carbon atom is usually an hydroxyl group-substituted alkyl group of 5 carbon atoms, preferably an hydroxyl group-substituted alkyl group of 2-3 carbon atoms. Typical examples of this (B) include 2-(ethylamino)-ethanol, 2-(methylanino)-ethanol, 2-(propylamino)-ethanol, 2-(isoprapylamino)-ethanol, 1-(ethylamino)-ethanol, 1-(methylamino)ethanol, 1-(propylamino)-ethanol and 1-(isopropylamino)ethanol, and above all, 2-(ethylamino)-ethanol and 2-(methylamino)-ethanol (hereinafter abbreviated to "MAE") are preferably used.

With regard to a mixing ratio of the amine compounds (X) and (Y), the amine compound (Y) is in the range of 1 to 25 parts by weight, preferably in the range of 1 to 10 parts by weight based on 100 parts by weight of (X) in the case that the amine compound (X) comprises (A) and/or (B). Furthermore, the amine compound (Y) is in the range of 1 to 25% by weight, preferably in the range of 10 to 25% by weight, based on 100 parts by weight of (X) in the case that the amine compound (X) comprises (C) diethanol. The concentration of the amine compound (X) in the mixed aqueous solution (which may be called an absorbing solution) is usually from 15 to 65% by weight, depending upon the kind of (X). The temperature of the mixed aqueous solution at the time of the contact with the combustion exhaust gas is usually in the range of 30 to 70°C.

If necessary, a corrosion inhibitor, a hindered amine aging inhibitor and the like can be added to the mixed aqueous solution which can be used in the present invention.

In this connection, the expression "under atmospheric pressure" in the present invention covers a pressure range including the vicinity of the atmospheric pressure which permits the function of a blower or the like for feeding the combustion exhaust gas.

### BRIEF DESCRIPTION OF THE DRAWINGS

Fig. 1 is a flow sheet of one example of processes which can be employed in the present invention.
Fig. 2 shows an addition effect of an amine compound (Y) In an absorbing solution using DEA.
Fig. 3 is a graph showing a relation between the absorption of an absorbing solution (Nm³ of CO₂/m³ of absorbing solution, ordinate axis) and a temperature (°C, abscissa axis) in Example 6.

### DETAILED DESCRIPTION OF PREFERRED EMBODIMENTS

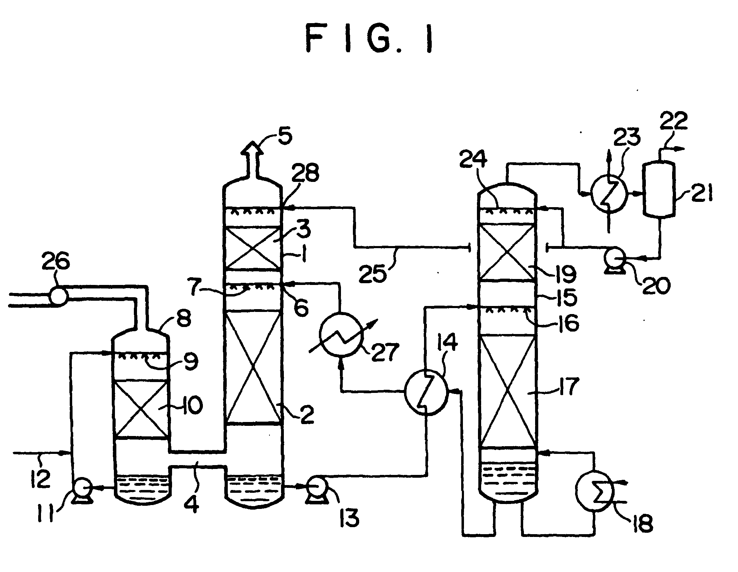

No particular restriction is put on a process which can be employed in a method for removing CO₂ from a combustion exhaust gas according to the present invention, and its one example will be described in reference to Fig. 1. In Fig. 1, only main facilities are shown, and attachment devices are omitted.

In Fig. 1, numeral 1 is a CO₂ removing tower, 2 is a lower filling portion, 3 is an upper filling portion or a tray, 4 is a CO₂ removing tower combustion exhaust gas feed opening, 5 is a CO₂-free combustion exhaust gas discharge opening, 6 is an absorbing solution feed opening, 7 is a nozzle, 8 is a combustion exhaust gas cooler which can be provided when needed, 9 is a nozzle, 10 is a filling portion, 11 is a humidifying/cooling water circulating pump, 12 is a supplemental water feed line, 13 is a CO₂-containing absorbing solution discharge pump, 14 is a heat exchanger, 15 is an absorbing solution reproducing tower (which can also simply be called "reproducing tower"), 16 is a nozzle, 17 is a lower filling portion, 18 is a reproducing heater (reboiler), 19 is an upper filling portion, 20 is a reflux water pump, 21 is a CO₂ separator, 22 is a recovered CO₂ discharge line, 23 is a reproducing tower reflux condenser, 24 is a nozzle, 25 is a reproducing tower reflux water feed line, 26 is a combustion exhaust gas feed blower, 27 is a cooler, and 28 is a reproducing tower reflux water feed opening.

In Fig. 1, the combustion exhaust gas is introduced into the combustion exhaust gas cooler 8 by means of the combustion exhaust gas feed blower 26, brought into contact with humidifying/cooling water from the nozzle 9 in the filling portion 10, humidified/cooled therein, and then led to the CO₂ removing tower 1 through the CO₂ removing tower combustion exhaust gas feed opening 4. The humidifying/cooling water which has been brought into contact with the combustion exhaust gas is stored in the lower portion of the combustion exhaust gas cooler 8, and it is then circulated to the nozzle 9 by means of the pump 11 and used again. The humidifying/cooling water is gradually lost, while used to humidify/cool the combustion exhaust gas, and therefore it is replenished through the supplemental water feed line 12. When the humidified/cooled combustion exhaust gas is further cooled in view of the state of this gas, a heat exchanger can be disposed between the humidifying/cooling water circulating pump 11 and the nozzle 9 to cool the humidifying/cooling water, and the thus cooled water can be then fed to the combustion exhaust gas cooler 8.

The combustion exhaust gas introduced into the CO₂ removing tower 1 is brought into counterflow contact with the absorbing solution having a predetermined concentration fed from the nozzle 7 in the lower filling portion 2, whereby CO₂ in the combustion exhaust gas is absorbed/removed by the absorbing solution. Afterward, the CO₂-free combustion exhaust gas streams toward the upper filling portion 3. The absorbing solution fed to the CO₂ removing tower 1 absorbs CO₂, and the temperature of the absorbing solution becomes higher than a temperature thereof at the feed opening 6 owing to absorption heat generated by the absorption. The absorbing solution is then forwarded to the heat exchanger 14 by means of the CO₂-containing absorbing solution discharge pump 13, and it is heated and then led to the absorbing solution reproducing tower 15. The temperature adjustment of the reproduced absorbing solution can be carried out by the heat exchanger 14 or the cooler 27 disposed between the heat exchanger 14 and the feed opening 6, if necessary.

In the absorbing solution reproducing tower 15, the absorbing solution is reproduced in the lower filling portion 17 by heating of the reproducing heater 18, and then cooled by the heat exchanger 14, and then returned to the CO₂ removing tower 1. In the upper portion of the absorbing solution reproducing tower 15, CO₂ separated from the absorbing solution is brought into contact with reflux water fed from the nozzle 24 in the upper filling portion 19, and then cooled by the reproducing tower reflux condenser 23. Afterward, in CO₂ separator 21, CO₂ is separated from reflux water formed by the condensation of water vapor accompanied with CO₂, and then led to a CO₂ recovery process through the recovered CO₂ discharge line 22. A large part of the reflux water is refluxed to the absorbing solution reproducing tower 15 by means of the reflux water pump 20, and a small part of the reflux water is fed to the reproducing tower reflux water feed opening 28 of the CO₂ removing tower 1 through the reproducing tower reflux water feed line 25. Since this reproducing tower reflux water contains a small amount of the absorbing solution, it is brought into contact with the exhaust gas in the upper filling portion 3 of the CO₂ removing tower 1, thereby contributing to the removal of a small amount of CO₂ contained in the exhaust gas.

Now, the present invention will be described in detail in reference to examples.

### Example 1, Comparative Examples 1 to 5

50 ml of an absorbing solution, i.e., an aqueous solution prepared by mixing an amine compound (X) selected from 2-amino-2-methyl-1-propanol (AMP), diethanolamine (DEA) and monoethanolamine (MEA) with an amine compound (Y) selected from 2-(methylamino)-ethanol (MAE) and piperazine in each ratio shown in Table 2 was placed in a glass reaction vessel (flask) disposed in a thermostatic chamber, and a mixed gas (a test gas) was fed to the flask with stirring at 40°C at a flow rate of 1 liter/minute under atmospheric pressure. The test gas used herein was a model combustion exhaust gas (which corresponds to an LNG-fired exhaust gas) at 40°C having a composition of 10 mole% of CO₂, 3 mole% of O₂ and 87 mole% of N₂.

The test gas was continuously allowed to stream, and when the CO₂ concentration of the fed gas was equal to that of the discharged gas, CO₂ contained in the absorbing solution was measured by the use of a CO₂ analyzer (a total organic carbon meter) to measure the absorption of CO₂ in a saturation state (Nm³ of CO₂/m³ of the absorbing solution, and mole of CO₂/mole of the absorbing solution).

A tangential gradient at the beginning of the gas feed was calculated from a relation graph between the CO₂ concentration of the gas at a flask outlet and a gas feed time, and a CO₂ initial absorption rate of the absorbing solution was obtained in a ratio to an initial absorption rate in the aqueous MEA solution at the same concentration as In the amine compound (X).

The same test as described above was carried out at 60°C.

Furthermore, for comparison, each single solution of the amine compounds (X), i.e, MEA, DEA and AMP was subjected to an absorption test at 40°C, 60°C and 80°C.

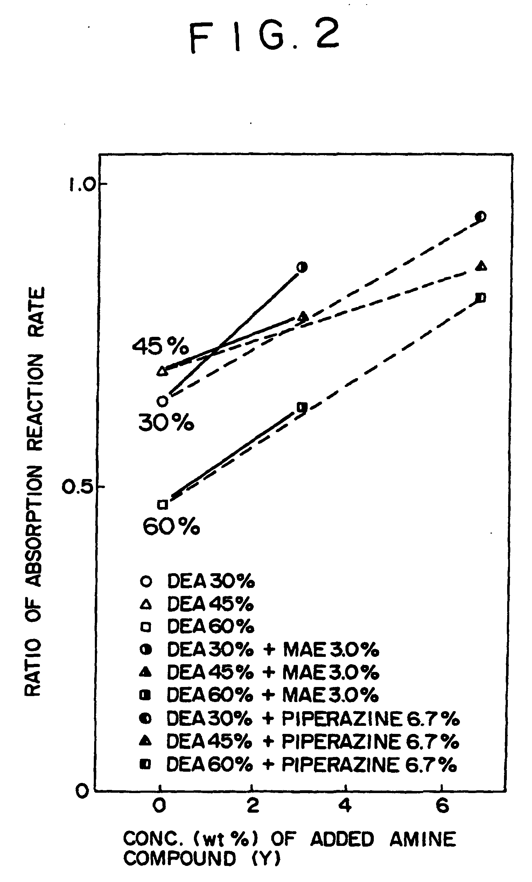

The obtained results are set forth in Tables 2 to 4 and Fig. 2. This Fig. 2 shows an addition effect of the amine compound (Y) at a temperature of 40°C in the case that DEA was used as the amine compound (X), and in this drawing, an abscissa axis was the concentration of MAE and piperazine as the amine compounds (Y) and an ordinate axis was an absorption reaction rate ratio.

**Table 2**

| CO₂ Absorption of Absorbing Test Solution In Saturation Stat (Nm³ of CO₂/m³ of Solution) | | | | |
|---|---|---|---|---|
| | Absorbing Test Solution | (wt%) | Absorption of CO₂ in Saturation State (Nm³ of CO₂/m³ of Solution) | |
| | | | 40°C | 60°C |
| Comp. Example 1 | Monoethanolamine (MEA) | 30% | 61.15 | 56.45 |
| | | 45% | 89.15 | 79.74 |
| | | 60% | 101.70 | 105.73 |
| Comp. Example 2 | Diethanolamine (DEA) | 30% | 34.27 | 23.30 |
| | | 45% | 47.04 | 34.94 |
| | | 60% | 56.45 | 43.90 |
| Comp. Example 3 | 2-amino-2-methyl-1 -propanol (AMP) | 30% | 54.43 | 33.38 |
| Example 1 | AMP + (1) | 30% | 56.22 | 37.41 |
| Comp. Example 4 | AMP + (2) | 30% | 62.50 | 48.16 |
| | DEA + (1) | 30% | 36.74 | 28.45 |
| | | 45% | 49.50 | 37.86 |
| Comp. Example 5 | | 60% | 62.94 | 48.16 |
| | DEA + (2) | 30% | 46.59 | 37.18 |
| | | 45% | 59.81 | 46.37 |
| | | 60% | 72.13 | 57.34 |
| AMP + (1): 50 ml of AMP test solution + 1.5 g (0.02 mole) of MAE | | | | |
| AMP + (2): 50 ml of AMP test solution + 3.34 g (0.02 mole) of piperazine | | | | |
| DEA + (1): 50 ml of DEA test solution + 1.5 g (0.02 mole) of MAE | | | | |
| DEA + (2): 50 ml of DEA test solution + 3.34 g (0.02 mole) of piperazine | | | | |

**Table 3**

| CO₂ Absorption of Absorbing Test Solution in Saturation Stat (mole of CO₂/mole of Solution) | | | | |
|---|---|---|---|---|
| | Absorbing Test Solution | (wt%) | Absorption of CO₂ in Saturation State (mole of CO₂/mole of Soln.) | |
| | | | 40°C | 60°C |
| Comp. Example 1 | Monoethanolamine (MEA) | 30% | 0.58 | 0.51 |
| | | 45% | 0.54 | 0.48 |
| | | 60% | 0.46 | 0.48 |
| Comp. Example 2 | Diethanolamine (DEA) | 30% | 0.54 | 0.36 |
| | | 45% | 0.49 | 0.38 |
| | | 60% | 0.44 | 0.34 |
| Comp. Example 3 | 2-amino-2-methyl-1-propanol (AMP) | 30% | 0.72 | 0.44 |
| Example 1 | AMP + (1) | 30% | 0.67 | 0.44 |
| Comp. Example 4 | AMP + (2) | 30% | 0.67 | 0.52 |
| | DEA + (1) | 30% | 0.50 | 0.39 |
| | | 45% | 0.47 | 0.36 |
| Comp. Example 5 | | 60% | 0.46 | 0.35 |
| | DEA + (2) | 30% | 0.57 | 0.54 |
| | | 45% | 0.53 | 0.41 |
| | | 60% | 0.49 | 0.39 |
| AMP + (1): 50 ml of AMP test solution +1.5 g (0.02 mole) of MAE | | | | |
| AMP + (2): 50 ml of AMP test solution + 3.34 g (0.02 mole) of piperazine | | | | |
| DEA + (1): 50 ml of DEA test solution + 1.5 g (0.02 mole) of MAE | | | | |
| DEA + (2): 50 ml of DEA test solution + 3.34 g (0.02 mole) of piperazine | | | | |

**Table 4**

| Absorption Reaction Initial Rate Ratio of Absorbing Test Solution | | | | |
|---|---|---|---|---|
| | Absorbing Test Solution | (wt%) | Ratio of Absorption Reaction Initial Rate | |
| | | | 40°C | 60°C |
| Comp. Example 1 | Monoethanolanine (MEA) | 30% | 1.00 | 1.03 |
| | | 45% | 1.00 | 1.06 |
| | | 60% | 0.97 | 1.05 |
| Comp. Example 2 | Diethanolamine (DEA) | 30% | 0.64 | 0.84 |
| | | 45% | 0.69 | 0.87 |
| | | 60% | 0.47 | 0.82 |
| Comp. Example 3 | 2-amino-2-methyl-1-propanol (AMP) | 30% | 0.69 | 0.95 |
| Example 6 | AMP + (1) | 30% | 0.95 | 1.00 |
| | AMP + (2) | 30% | 0.97 | 0.97 |
| Comp. Example 4 | DEA+(1) | 30% | 0.86 | 0.95 |
| | | 45% | 0.77 | 0.91 |
| | | 60% | 0.63 | 0.82 |
| Comp. Example 5 | DEA + (2) | 30% | 0.94 | 1.00 |
| | | 45% | 0.86 | 1.01 |
| | | 60% | 0.81 | 0.94 |
| AMP + (1): 50 ml of AMP test solution + 1.5 g (0.02 mole) of MAE | | | | |
| AMP + (2): 50 ml of AMP test solution + 3.34 g (0.02 mole) of piperazine | | | | |
| DEA + (1): 50 ml of DEA test solution + 1.5 g (0.02 mole) of MAE | | | | |
| DEA + (2): 50 ml of DEA test solution + 3.34 g (0.02 mole) of piperazine | | | | |

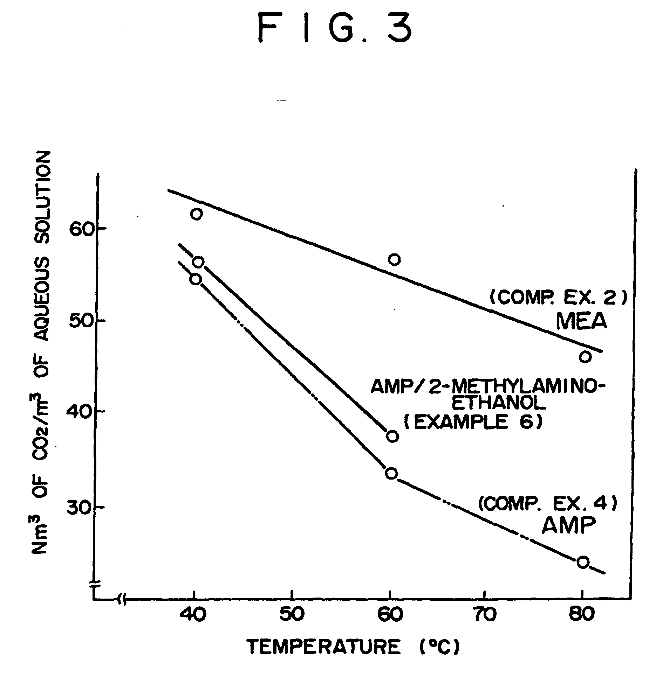

Furthermore, Fig. 3 showns a relating between the absorption of CO₂ (Nm³ of CO₂/m³ of the absorbing solution) and temperature. It is apparent from Fig. 3 that the absorption of CO₂ decreases more largely with the elevation of the absorbing solution temperature in the case that a mixture of AMP and 2-methylaminoethanol was used than in the case that MEA was used. This indicates that heat energy can be more saved in the reproduction of the absorbing solution in the case of the mixture of AMP and 2-methylaminoethanol than in the case of MEA.

As is definite from the above-mentioned results, when an amine compound (X) is mixed with a relatively small amount of an amine compound (Y) and then used in accordance with the present invention, an initial absorption rate can be improved more largely than in the case that the amine compound (X) is singly used. In addition, the absorption of CO₂ per unit mole of (X) of a mixed absorbing solution is larger than in the case that MEA is used.

As described above, when a mixed aqueous solution of a specific amine compound (X) and a specific amine compound (Y) is used as an absorbing solution for a combustion exhaust gas under atmospheric pressure in accordance with a method of the present invention, an absorption rate of CO₂ can be improved more largely than when the amine compound (X) is singly used. Additionally, according to the present invention, the removal of CO₂ can be more efficiently achieved from the viewpoints of absorption and reproduction energy than when MEA is used.

## Claims

1. A method for removing carbon dioxide from a combustion exhaust gas which method comprises the step of bringing said combustion exhaust gas under atmospheric pressure into contact with an aqueous solution of a hindered amine (exclusive of a amine having two or more amino groups selected from an aqueous solution of 100 parts by weight of an amine-compound (X) selected from the group consisting of (A), and 1-25 parts by weight of an amines-compound (Y) selected from the group consisting of (D') piperazine, (E') piperidine, (F') morpholine, (G') glycine, (D) and (B), wherein (A), (B), and (D) are defined as:
(A) a compound having an alcoholic hydroxyl group and a primary amino group, said primary amino group being bonded to a tertiary carbon atom having two unsubstituted alkyl groups;
(B) a compound having one alcoholic hydroxyl group and a secondary amino group in its molecule, said secondary amino group having an unsubstituted alkyl group of 3 or less carbon atoms and a N atom bonded to a group having a chain of 2 or more carbon atoms inclusive of a bonded carbon atom;
(D) a 2-substituted piperidine having a hydroxyl group-substituted alkyl group at the 2-position.

2. The method of claim 1 wherein said hindered amine is 2-amino-2-methyl-1-propanol.

## Patentansprüche

1. Verfahren zum Entfernen von Kohlendioxid aus Verbrennungsabgasen, welches die Stufen des In-Berührung-Bringens des Verbrennungsabgases unter Atmosphärendruck mit einer wässrigen Lösung eines gehinderten Amins (abgesehen von einem Amin mit 2 oder mehreren Aminogruppen) umfasst, die ausgewählt ist aus einer wässrigen Lösung von 100 Gewichtsteilen einer Aminverbindung (X), ausgewählt aus der Gruppe bestehend aus (A), und 1 - 25 Gewichtsteilen einer Aminverbindung (Y) ausgewählt aus der Gruppe bestehend aus (D') Piperazin, (E') Piperidin, (F') Morpholin, (G') Glycin, (D) und (B), umfasst, worin (A), (B), und (D) definiert sind:
(A) eine Verbindung mit einer alkoholischen Hydroxylgruppe und einer primären Aminogruppe, wobei die primäre Aminogruppe an ein tertiäres Kohlenstoffatom mit 2 unsubstituierten Alkylgruppen gebunden ist;
(B) eine Verbindung mit einer alkoholischen Hydroxylgruppe und einer sekundären Aminogruppe, wobei die sekundäre Aminogruppe ein Stickstoffatom aufweist, das an eine Gruppe mit einer Kette von 2 oder mehreren Kohlenstoffatomen, einschließlich eines gebundenen Kohlenstoffatomes gebunden ist;
(D) ein 2-substituiertes Piperidin mit einer Alkylgruppe in 2-Stellung, die mit einer Hydroxylgruppe substituiert ist.

2. Verfahren gemäß Anspruch 1, **dadurch gekennzeichnet, dass** das gehinderte Amin 2-Amino-2-methyl-1-propanol ist.

## Revendications

1. Procédé pour enlever le dioxyde de carbone (ou anhydride carbonique) d'un gaz d'échappement de combustion, qui comprend les étapes consistant à mettre ledit gaz d'échappement de combustion, sous la pression atmosphérique, en contact avec une solution aqueuse d'une amine présentant de l'empêchement stérique (à l'exclusion d'une amine comportant deux ou plus de deux groupes amino) choisi parmi une solution aqueuse de 100 parties en poids d'une amine (X) choisie dans l'ensemble consistant en (A), et 1 à 25 parties en poids d'une amine (Y) choisie dans l'ensemble consistant en (D') la pipérazine, (E') la pipéridine, (F') la morpholine, (G') la glycine, (D) et (B), où (A), (B), et (D) sont définis comme :
(A) un composé comportant un groupe hydroxyle alcoolique et un groupe amino primaire, ledit groupe amino primaire étant fixé sur un atome de carbone tertiaire comportant deux groupes alkyles non substitués,
B) un composé comportant un groupe hydroxyle alcoolique et un groupe amino secondaire dans sa molécule, ledit groupe amino secondaire ayant un atome de N fixé sur un groupe ayant une chaîne de deux ou de plus de deux atomes de carbone, y compris un atome de carbone de liaison,
D) une pipérazine substituée en position 2, comportant un groupe alkyle à substituant hydroxyle fixé en position 2.

2. Procédé selon la revendication 1, dans lequel l'amine présentant de l'empêchement stérique est le 2-amino-2-méthyl-1-propanol.
